Europäisches Patentamt

**European Patent Office**

Office européen des brevets

(11) Numéro de publication: **0 208 624**
**B1**

(12) # FASCICULE DE BREVET EUROPEEN

(45) Date de publication du fascicule du brevet:
24.05.89

(51) Int. Cl.⁴: **B 65 D 88/12,** B 60 P 1/64,
B 60 P 7/13

(21) Numéro de dépôt: **86420137.1**

(22) Date de dépôt: **27.05.86**

(54) Dispositif porte-conteneurs à fonctions multiples.

(30) Priorité: **29.05.85 FR 8508576**

(43) Date de publication de la demande:
**14.01.87 Bulletin 87/3**

(45) Mention de la délivrance du brevet:
**24.05.89 Bulletin 89/21**

(84) Etats contractants désignés:
**BE DE GB IT LU NL SE**

(56) Documents cités:
**EP-A- 0 082 631**
**US-A- 3 866 970**

(73) Titulaire: **BENNES MARREL, Société Anonyme dite,
Zone Industrielle Sud, F-42161 Andrézieux Boutheon
Cédex (FR)**

(72) Inventeur: **Corompt, Antoine, 63 Rue Bergson,
F-42000 Saint Etienne (FR)**

(74) Mandataire: **Rinuy, Santarelli, 14, avenue de la Grande
Armée, F-75017 Paris (FR)**

## Description

La présente invention est relative à un dispositif polyvalent d'un type nouveau, destiné à permettre la manutention et le transport de conteneurs ou de palettes de types divers, y compris des conteneurs standard connus sous la dénomination «conteneurs ISO».

On sait qu'un conteneur ISO a une forme parallélépipédique rectangle aux dimensions normalisées, dont les angles sont équipés chacun d'un bloc rigide de préhension dit «corner fitting». Chaque bloc de préhension peut recevoir un bloc de manutention dit «twist lock» qu'on y verrouille de façon amovible pour immobiliser le conteneur, soit dans un engin de manutention, soit sur un véhicule de transport.

On connaît un conteneur de manutention à l'avant duquel se trouve un logement vertical dont le sommet est susceptible de recevoir le crochet de levage d'un engin de manutention. La base de ce conteneur a des dimensions correspondant aux normes ISO, et elle reçoit un conteneur de type connu et dans la paroi avant duquel se trouve en creux une niche pour recevoir le chevalet d'un engin de manutention. Ce type de conteneur est connu par exemple par le brevet français 2 358 352. Par contre, si l'on posait sur une palette à chevalet de manutention, un conteneur ISO standard à paroi avant plane, l'arrière du conteneur (et ses blocs de préhension) dépasseraient à l'arrière de la palette d'une quantité correspondant à l'épaisseur du chevalet avant. En particulier, cela interdirait tout verrouillage sur la palette, des blocs de préhension du conteneur.

Pour éviter cet inconvénient, il est décrit dans le document EP-A-82 631 comment prévoir deux blocs de verrouillage (twist lock) adaptables de façon amovible sur l'arrière de la palette. Malheureusement, ce système à blocs de verrouillage arrière détachables présente en pratique de nombreux inconvénients. Entre autres, l'utilisateur n'a jamais sous la main ces blocs amovibles de verrouillage, et il est fréquent qu'on les perde d'un transport à l'autre.

La présente invention a pour but d'éviter ces inconvénients en réalisant une palette de manutention du type précité, susceptible de recevoir aussi bien des conteneurs à niche avant que des conteneurs de type ISO, sans qu'il soit nécessaire de lui adapter des blocs indépendants pour les blocs arrière de verrouillage.

Un dispositif porte-conteneurs selon l'invention comprend une plate-forme rectangulaire de longueur hors tout normalisée surmontée à l'avant par un chevalet pour recevoir un crochet de levage, cette plate-forme comportant en ses quatre coins quatre blocs de préhension, tandis que derrière chacun des deux blocs de préhension avant se trouve un bloc de verrouillage, caractérisé en ce que en avant et à côté de chacun des deux blocs de préhension arrière, la plate-forme est découpée suivant un logement longitudinal dans lequel un axe transversal sert de pivot à un bras longitudinal susceptible de basculer d'avant en arrière pour passer de l'une à l'autre des deux positions suivantes:

– en position arrière de fonctionnement, le bras dépasse à l'arrière de la plate-forme dont sa face supérieure horizontale prolonge la face de chargement, ledit bras étant alors surmonté par un bloc de verrouillage dont il est solidaire et qui définit avec les blocs de verrouillage avant, une longueur égale à ladite longueur hors tout normalisée.

– en position arrière escamotée, le bras est rabattu vers l'avant dans son logement et ne dépasse pas au-dessus de la face de chargement de la plate-forme dont la longueur totale n'excède alors pas ladite longueur hors tout normalisée.

Les dessins annexés, donnés à titre d'exemple non limitatif, permettront de mieux comprendre les caractéristiques de l'invention.

La fig. 1 est une vue en perspective montrant schématiquement l'ensemble d'un dispositif selon l'invention sur l'arrière d'une plate-forme de manutention;

la fig. 2 montre le dispositif escamoté dans l'arrière de la plate-forme, laquelle peut alors être manipulée comme un conteneur ISO;

la fig. 3 montre le dispositif déployé pour prolonger l'arrière de la plate-forme, laquelle peut alors recevoir un conteneur ISO;

la fig. 4 montre en vue latérale le bras arrière gauche déployé;

la fig. 5 est une vue en plan correspondante;

la fig. 6 est une coupe suivant VI-VI.

On a représenté sur les dessins un dispositif polyvalent 1 selon l'invention, qui comprend une plate-forme 2 réalisée à l'avant suivant une structure connue. En particulier, l'avant de la plate-forme 2 est surmonté d'un chevalet d'accrochage et de manutention 3 qui en est solidaire. Ce chevalet 3 a une épaisseur 4.

A l'avant, la plate-forme 2 comporte à la manière connue deux blocs de préhension 5 suivis de deux blocs de verrouillage 6.

A l'arrière, la plate-forme 2 comporte aussi deux blocs de préhension. L'espacement des blocs de préhension avant 5 et arrière 7 correspond à la longueur totale 8 définie par la norme ISO.

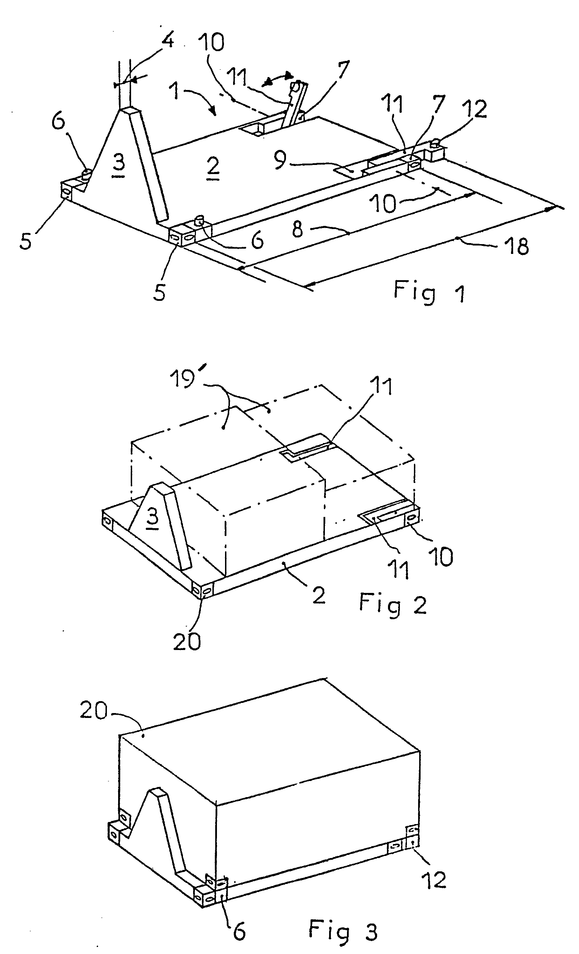

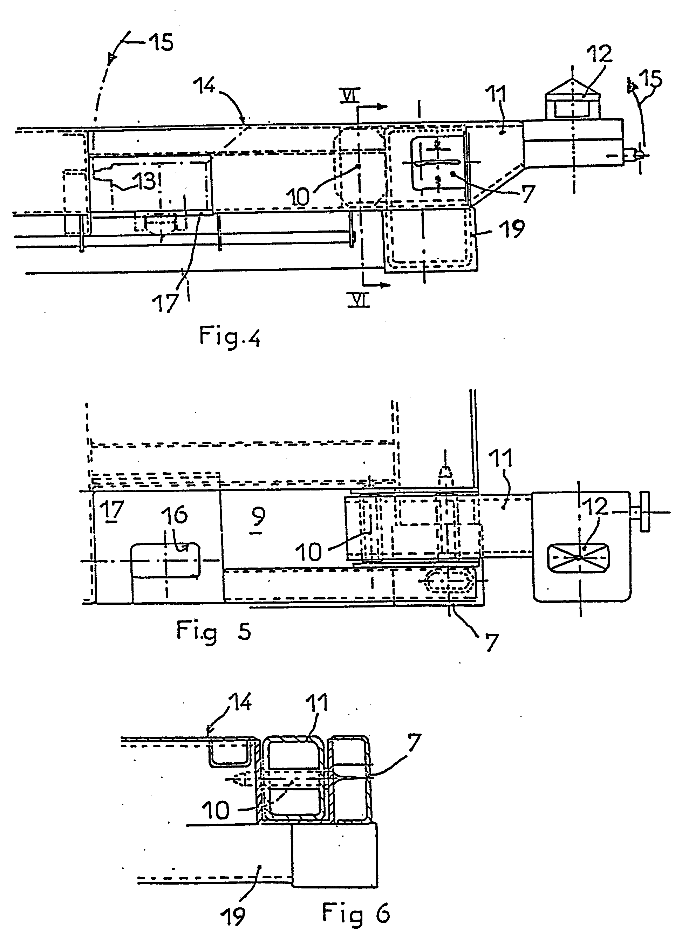

L'invention prévoit dans l'épaisseur de la plate-forme 2, en avant et à côté de chacun des blocs de préhension arrière 7, un logement longitudinal 9 dans lequel un axe transversal 10 sert de pivot à un bras longitudinal 11. L'extrémité libre de chaque bras 11 possède un bloc de verrouillage ou «twist lock» 12 qui fait saillie vers le haut lorsque le bras 11 est rabattu vers l'arrière (figures 3 et 4).

Par contre, lorsqu'un bras 11 est rabattu vers l'avant comme indiqué par les flèches 15 (fig. 4) jusqu'à la position schématisée par 13, il ne dépasse pas au-dessus de la face de chargement 14 de la plate-forme 2. Dans ces conditions, le bloc de verrouillage 12 se loge à travers une échancrure 16 prévue dans une plaque inférieure fixe 17 supportant le poids du bras 11.

Quand les bras 11 sont rabattus vers l'arrière (figures 3 à 6), chacun d'eux repose sur une traverse fixe 19 si bien que les deux blocs de verrouillage arrière 12 qu'ils portent sont au même niveau que les deux blocs de verrouillage avant 6.

Le fonctionnement est le suivant:

Quand les deux bras 11 sont rabattus vers l'avant (fig. 2 et position 13 en fig. 4), la plate-forme 2 est au gabarit de la norme ISO (longueur hors tout 8). Portant une charge 19' de forme quelconque, elle peut être manipulée par des appareils de manutention aux normes ISO.

Par contre, si les bras 11 sont rabattus vers l'arrière (figures 1 et 3 à 6), la palette possède quatre blocs de verrouillage 6 et 12 correspondant à une longueur hors tout 18 elle-même conforme à la norme ISO, c'est-à-dire égale à la longueur 8 précédente. Dans ce cas, elle peut recevoir et verrouiller par les blocs de verrouillage 6 et 12, un conteneur ISO standard 20 (fig. 3).

On remarque que pour passer d'une position à l'autre, il suffit de basculer les bras 11 qui font partie de la plate-forme 2 et ne peuvent pas en être détachés.

**Revendications**

1. Dispositif porte-conteneurs comprenant une plate-forme rectangulaire (2) de longueur hors tout normalisée (8) surmontée à l'avant par un chevalet (3) pour recevoir un crochet de levage, cette plate-forme (2) comportant en ses quatre coins quatre blocs de préhension (5, 7), tandis que derrière chacun des deux blocs de préhension avant (5) se trouve un bloc de verrouillage (6), caractérisé en ce que en avant et à côté de chacun des deux blocs de préhension arrière (7), la plate-forme (2) est découpée suivant un logement longitudinal (9) dans lequel un axe transversal (10) sert de pivot à un bras longitudinal (11) susceptible de basculer d'arrière en avant pour passer de l'une à l'autre des deux positions suivantes:

— en position arrière de fonctionnement, le bras (11) dépasse à l'arrière de la plate-forme (2) et sa face supérieure horizontale prolonge la face de chargement (14) de la plate-forme (2), ledit bras (11) étant alors surmonté par un bloc de verrouillage (12) dont il est solidaire et qui définit avec les blocs de verrouillage avant (6) une longueur (18) égale à ladite longueur hors tout normalisée;

— en position avant escamotée, le bras (11) est rabattu vers l'avant dans son logement (9) et ne dépasse pas audessus de la face de chargement (14) de la plate-forme (2) dont la longueur totale n'excède alors pas ladite longueur hors tout normalisée (8).

2. Dispositif suivant la revendication 1, caractérisé en ce que l'avant de chaque logement (9) comporte à sa partie inférieure une plaque de support fixe (17) dans laquelle est découpée une échancrure (16) pour recevoir le verrou du bloc (12) équipant le bras (11) lorsque celui-ci est escamoté vers l'avant.

3. Dispositif suivant la revendication 1, caractérisé en ce que lorsque les bras (11) sont rabattus vers l'arrière, chacun d'eux repose sur une traverse fixe (19) si bien que les deux verrous arrière (12) qu'ils portent, sont au même niveau que les deux verrous avant (6).

**Patentansprüche**

1. Containerstransportvorrichtung mit einer rechteckigen Plattform (2) von einer genormten Länge (8) über alles, über der vorne ein Steg (3) zur Aufnahme eines Hebehakens angeordnet ist, welche Plattform (2) an ihren vier Ecken vier Greifblöcke (5, 7), aufweist, wobei sich hinter jedem der beiden vorderen Greifblöcke (5) ein Verriegelungsblock (6) befindet, dadurch gekennzeichnet, daß vor und seitlich der beiden hinteren Greifblöcke (7) die Plattform (2) zu einem länglichen Sitz (9) ausgeschnitten ist, in welchem eine Querachse (10) als Schwenklager für einen Längsarm (11) dient, der von hinten nach vorne kippen kann, um sich von der einen in die andere der beiden folgenden Positionen zu bewegen:

— in einer hinteren Arbeitsposition steht der Arm (11) nach hinten über die Plattform (2) vor und seine obere horizontale Außenfläche verlängert die Ladefläche (14) der Plattform (2), über welchem Arm dann ein Verriegelungsblock (12) liegt, mit dem er fest verbunden ist und der mit den vorderen Verriegelungsblöcken (6) eine Länge (18) begrenzt, die gleich der genannten Normlänge über alles ist;

— in seiner vorderen versenkten Position ist der Arm (11) in seinem Sitz (9) nach vorne umgelegt und steht nicht über die Ladefläche (14) der Plattform (2) vor, deren Gesamtlänge dann nicht größer als die genannte Normlänge (8) ist.

2. Vorrichtung nach Anspruch 1, dadurch gekennzeichnet, daß der vordere Teil eines jeden Sitzes (9) an seinem unteren Teil eine feste Trägerplatte (17) aufweist, die eine Aussparung (16) zur Aufnahme des Riegels des Blockes (12) aufweist, mit dem der Arm (11) versehen ist, wenn dieser nach vorne versenkt ist.

3. Vorrichtung nach Anspruch 1, dadurch gekennzeichnet, daß dann, wenn die Arme (11) nach hinten umgelegt sind, jeder von ihnen auf einem festen Quersteg (19) aufliegt, so daß die beiden von ihnen getragenen hinteren Riegel (12) sich in gleicher Höhe wie die beiden vorderen Riegel (6) befinden.

**Claims**

1. A container handling device comprising a rectangular platform (2) of standard overall length (8) having an upstanding trestle (3) at the front end for receiving a lifting hook, this platform (2) comprising four holding blocks (5, 7) in its four corners, with a twist lock (6) behind each of the front holding blocks (5), characterized in that in front of and at the side of each of the two rear holding blocks (7) the platform (2) is cut to form an axial recess (9) wherein a crosspin (10) provides a pivoting axis for an axial arm (11) which can pivot backwards and forwards to move from one to the other of the two following positions:

— in the rearward operating position the arm (11) extends backward from the platform (2) and its upper horizontal surface extends the loading surface (14) of the platform (2), the said arm (11) then being surmounted by a twist lock (12) which is permanently attached to it and which lock defines with the forward twist locks (6) a length (18) equal to the said overall standard length;

— in the forward retracted position the arm (11) is folded down forwards in its recess (9) and does not project above the loading surface (14) of the platform (2), the total length of which does not then exceed the said overall standard length (8).

2. A device according to claim 1, characterized in thet the front part of each recess (9) comprises in its lower portion a fixed support plate (17) in which a slot (16) is cut to receive the twist lock (12) equipping the arm (11) when the latter is in the forward retracted position.

3. A device according to claim 1, characterized in that when the arms (11) are folded down rearwards, each of them rests on a fixed cross-piece (19) so that the two rear twist locks (12) which they carry are at the same level as the two front twist locks (6).

Fig 1

Fig 2

Fig 3

**Fig.4**

**Fig 5**

**Fig 6**